# EUROPÄISCHE PATENTANMELDUNG

(11) **EP 2 789 828 A1**
(43) Veröffentlichungstag der Anmeldung: **15.10.2014**
(21) Anmeldenummer: 13163530.2
(22) Anmeldetag: 12.04.2013
(51) Int. Cl.: F02C 7/08, F02C 9/18

(54) **Verfahren zur Regelung der CO-Emissionen einer Gasturbine**

(71) Anmelder: Siemens Aktiengesellschaft, 80333 München (DE)
(72) Erfinder: Engler, Thorsten, 47447 Moers (DE); Gorynski, Markus, 45144 Essen (DE); Gutermuth, Manuel, 45147 Essen (DE); Kreutzer, Philipp, 45147 Essen (DE); Link, Marco, 46049 Oberhausen (DE); Savilius, Nicolas, 45359 Essen (DE); Süselbeck, Kai, 46145 Oberhausen (DE); Tertilt, Marc, 45529 Hattingen (DE)

(57) **Zusammenfassung**

Ein Verfahren zur Regelung der CO-Emissionen einer Gasturbine (1) mit einem Verdichter (4) und einer Turbine (8) soll eine vergleichsweise geringere Leistung der Gasturbine im Teillastbetrieb bei grenzwertkonformen CO-Emissionen erlauben. Dazu wird in einem Bereich des Verdichters (4) verdichtete Luft entnommen und über eine durchflussgeregelte Rückführleitung (18) dem Eintritt des Verdichters (4) zugeführt, wobei der Durchfluss der Rückführleitung (18) anhand eines CO-Abgasgehalts am Austritt der Turbine (8) geregelt wird.

## Beschreibung

Die Erfindung betrifft ein Verfahren zur Regelung der CO-Emissionen einer Gasturbine mit einem Verdichter und einer Turbine. Sie betrifft weiter eine Gasturbine mit einem Verdichter und einer Turbine.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Stationäre Gasturbinen werden - häufig in Kombination mit einer Dampfturbine in Gas- und Dampfturbinen-(GuD-)Kraftwerken - zur Stromerzeugung eingesetzt. Derartige Kraftwerke sind im Verbundnetz sehr flexibel einsetzbar, da sie die Möglichkeit schneller Laständerungen bieten. Gerade in Zeiten des Ausbaus erneuerbarer Energien, die abhängig z. B. von Windstärke und Sonneneinstrahlung nur unregelmäßig Energie erzeugen, bieten GuD-Kraftwerke durch ihre Flexibilität die Möglichkeit, diese Leistungsschwankungen auszugleichen.

Hierbei ist es jedoch unerwünscht, die Gasturbine bei nicht benötigter Leistung herunterzufahren und (wieder-)anzufahren, da es einerseits energetisch ungünstig ist, andererseits hohe mechanische Belastungen der Bauteile der Gasturbine durch die entstehenden Temperaturschwankungen erzeugt. Dies reduziert deren Lebensdauer. Nicht zuletzt benötigt das Anfahren eine gewisse Zeit, so dass die Reaktionsgeschwindigkeit bei Leistungsanforderungen aus dem Stromnetz herabgesetzt ist. Es ist daher erwünscht, die Gasturbine bei nicht benötigter Leistung bei einer möglichst geringen Leistung im Teillastbetrieb weiter zu betreiben.

Die minimal mögliche Leistung wird hierbei jedoch häufig nicht durch technische Gegebenheiten bedingt, sondern vielmehr durch gesetzliche Vorschriften hinsichtlich der Grenzwerte für Kohlenmonoxid-(CO-)Emissionen im Abgas. Bei sinkender Leistung sinkt nämlich die Verbrennungstemperatur in der Brennkammer, so dass die Verbrennung nur noch unvollständig erfolgt und die Entstehung von CO begünstigt wird.

Es ist daher Aufgabe der Erfindung, ein Verfahren zur Regelung der CO-Emissionen einer Gasturbine sowie eine Gasturbine anzugeben, die eine vergleichsweise geringere Leistung der Gasturbine im Teillastbetrieb bei grenzwertkonformen CO-Emissionen erlauben.

Diese Aufgabe wird bezüglich des Verfahrens erfindungsgemäß gelöst, indem in einem Bereich des Verdichters verdichtete Luft entnommen und über eine durchflussgeregelte Rückführleitung dem Eintritt des Verdichters zugeführt wird, wobei der Durchfluss der Rückführleitung anhand eines CO-Abgasgehalts am Austritt der Turbine geregelt wird.

Bezüglich der Gasturbine wird die Aufgabe gelöst, indem ein Bereich des Verdichters über eine Rückführleitung für verdichtete Luft mit dem Verdichtereintritt verbunden ist, wobei die Rückführleitung ein Durchflussregelventil aufweist, welches steuerungseingangsseitig mit einer Regelungseinrichtung verbunden ist, welche ein CO-Abgasgehalt-Ermittlungsmodul umfasst.

Die Erfindung geht dabei von der Überlegung aus, dass eine Absenkung der Leistung bei gleichbleibendem CO-Abgasgehalt insbesondere durch einen Regelungseingriff am Verdichter möglich wäre. Insbesondere eine Verringerung des Verdichtermassenstroms hat eine Leistungsabnahme zur Folge. Dies ist möglich, indem die Verdichtereintrittstemperatur erhöht wird, da eine Erhöhung der Verdichtereintrittstemperatur eine Absenkung der Luftdichte am Verdichtereintritt und damit eine Senkung des Verdichtermassenstroms zur Folge hat. Die Erhöhung der Verdichtereintrittstemperatur ist dabei in einfacher Weise möglich, indem bereits verdichtete und damit erwärmte Luft im Verdichter oder einem Bereich direkt dahinter entnommen wird und über eine Rückführleitung am Verdichtereintritt wieder zugeführt wird. Durch die teilweise Rezirkulation der verdichteten Luft wird dabei zusätzlich der Verdichtermassenstrom weiter reduziert. Dadurch wird die Leistung der Gasturbine ohne Absenkung der Verbrennungstemperatur verringert, so dass der CO-Grenzwert im Abgas weiter eingehalten werden kann. Die Regelung der Menge der rezirkulierten Luft erfolgt dabei über den CO-Abgasgehalt, der in einem CO-Abgasgehalt-Ermittlungsmodul in einer Regelungseinrichtung ermittelt wird, die ein Durchflussregelventil in der Rückführleitung entsprechend ansteuert.

Für das CO-Abgasgehalt-Ermittlungsmodul sind verschiedene Ausgestaltungen denkbar: In einfachster Ausgestaltung kann ein entsprechender Messsensor an einem geeigneten Ort angebracht sein, beispielsweise am Austritt der Turbine oder im Kamin eines kombinierten Gas- und Dampfturbinenkraftwerks. Da die Regelung hierbei vergleichsweise träge sein kann, ist auch eine Ermittlung des CO-Abgasgehalts über andere Kenngrößen der Gasturbine möglich, beispielsweise kann aus Werten wie der Leistung, Drehzahl, der Verbrennungstemperatur, der aktuellen Brennstoffverbrauchsmenge etc. ein Wert für den CO-Gehalt errechnet werden, der dann als Grundlage für die Regelung der Luftrückführung verwendet wird. Dieser Wert muss dabei nicht notwendigerweise explizit ermittelt werden, sondern es kann ein Kennfeld vorgesehen sein, welches direkt anhand der Eingangsgrößen dynamisch eine Stellung für das Regelventil in der Rückführleitung vorgibt. Der erwartete CO-Abgasgehalt geht dann im Wesentlichen nur noch bei der Erstellung des Kennfeldes ein.

In vorteilhafterweise Ausgestaltung wird bei einer Erhöhung des CO-Abgasgehalts der Durchfluss der Rückführleitung erhöht. Wie beschrieben wird dadurch der Verdichtermassenstrom gesenkt und die Verdichtereintrittstemperatur erhöht, wodurch die Leistung der Gasturbine verringert wird.

Häufig ist jedoch keine Senkung der Leistung bei gleichbleibenden CO-Abgasgehalt, sondern vielmehr eine Verringerung des CO-Abgasgehalts bei gleichbleibender Leistung gewünscht. Dazu wird vorteilhafterweise der Eintrittsmassenstrom des Verdichters anhand eines Sollwerts für die Leistung der Gasturbine geregelt. Wird nach dem oben beschriebenen Konzept der Durchfluss der Rückführleitung erhöht, sinkt die Leistung der Gasturbine ab. Dies führt bei der vorteilhaften Regelung zu einer Erhöhung des Eintrittsmassenstroms. Strukturell wird dies vorteilhafterweise durch verstellbare Eintrittsleitschaufeln realisiert, die steuerungseingangsseitig mit der Regelungseinrichtung verbunden sind. Damit wird die Leistung, die in einer Leistungsmesseinrichtung ermittelt wird, die datenausgangsseitig mit der Regelungseinrichtung verbunden ist, wieder auf den Sollwert angehoben und gleichzeitig die Verbrennungstemperatur erhöht. Somit wird bei gleichbleibender Leistung ein geringerer CO-Gehalt im Abgas erzielt.

In vorteilhafter Ausgestaltung wird die verdichtete Luft am Austritt des Verdichters entnommen, d. h. die Rückführleitung ist vorteilhafterweise am Austritt des Verdichters angeordnet. Hier ist die Temperatur der entnommenen Luft am höchsten, so dass ein geringerer Massenstrom von rückgeführter Luft für eine vorgegebene Temperaturerhöhung notwendig ist. Zudem nutzen so genannte Anti-Vereisungssysteme, die bei zu geringer Außentemperatur die Verdichtereintrittstemperatur erhöhen sollen, häufig ebenfalls Anzapfstellen am Verdichteraustritt. Diese könnten somit konstruktiv für beide Systeme genutzt werden.

In alternativer vorteilhafter Ausgestaltung wird die verdichtete Luft in einem Mittelbereich des Verdichters entnommen, d. h. die Rückführleitung ist vorteilhafterweise in einem Mittelbereich des Verdichters angeordnet. Als Mittelbereich werden hier Bereiche zwischen den Verdichterstufen verstanden, d. h. strömungsseitig nach der ersten Verdichterstufe und vor der letzten Verdichterstufe. Vorteilhaft ist hierbei, dass bei einer Entnahme von Luft vor dem Verdichteraustritt die geleistete Verdichterarbeit für die Druckerhöhung der entnommenen Luft niedriger ausfällt, als wenn Luft vom Verdichteraustritt entnommen wird. Dadurch steigt der Wirkungsgrad der Maschine im Vergleich zur vorgenannten Lösung.

In weiterer vorteilhafter Ausgestaltung wird der Durchfluss der Rückführleitung anhand einer Umgebungstemperatur geregelt, insbesondere bei einer Senkung der Umgebungstemperatur erhöht. Mit anderen Worten: Die für die CO-Senkung verwendete Rückführleitung wird in der Art einer Doppelnutzung auch für das bereits beschriebene Anti-Vereisungssystem genutzt. Alternativ kann ein bereits vorhandenes Anti-Vereisungssystem mittels der beschriebenen Regelung zur Senkung des CO-Abgasgehalts im Teillastbetrieb genutzt werden, d. h. die Rückführleitung ist vorteilhafterweise Teil des Anti-Vereisungssystems. Dies ermöglicht eine technisch besonders einfache Integration des Systems.

In einer Gasturbine werden die CO-Emissionen vorteilhafterweise mit dem beschriebenen Verfahren geregelt. Die Steuereinreichung ist dabei vorteilhafterweise für die Durchführung des beschriebenen Verfahrens ausgelegt.

Eine Kraftwerksanlage umfasst vorteilhafterweise eine derartige Gasturbine.

Die mit der Erfindung erzielten Vorteile bestehen insbesondere darin, dass durch die Rezirkulation von Verdichterluft von dessen Ende oder einem Mittelbereich zum Eintritt eine reduzierte Gasturbinenleistung bei gleichzeitig hoher Verbrennungstemperatur und damit geringeren CO-Emissionen realisiert wird. Der dadurch vergrößerte CO-konforme Betriebsbereich erhöht den Anwendernutzen, da er den Forderungen des Strommarktes nach flexiblen Kraftwerken entspricht.

Die Erfindung wird anhand eines in einer Zeichnung dargestellten Ausführungsbeispiels näher erläutert. Darin zeigen:
- FIG 1: schematisch eine Gasturbine, deren CO-Emissionen durch Rückführung von Verdichterluft zum Eintritt geregelt werden, und
- FIG 2: schematisch eine Gasturbine, deren CO-Regelungssystem in ein Anti-Vereisungssystem integriert ist.

Gleiche Teile sind in allen Figuren mit denselben Bezugszeichen versehen.

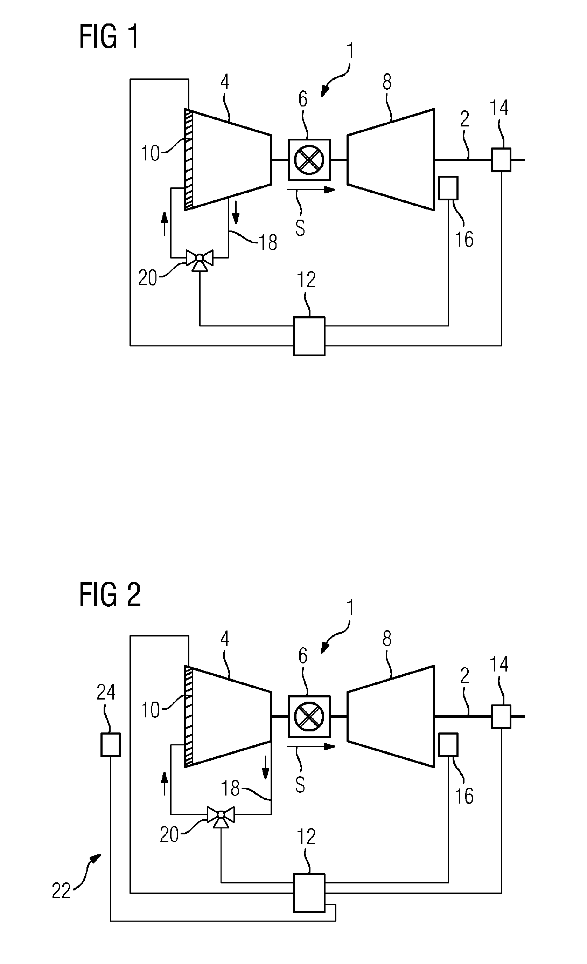

In FIG 1 ist schematisch eine Gasturbine 1 dargestellt, bei der auf einer eine Achse bildenden Welle 2 in Strömungsrichtung S ein Verdichter 4, eine Brennkammer 6 und eine Turbine 8 angeordnet sind. Luft wird am Eintritt des Verdichters 4 angesaugt, verdichtet und in der Brennkammer 6 mit einem Brennstoff gemischt und gezündet. Anschließend wird das Heißgasgemisch in der Turbine 8 entspannt und tritt als Abgas am Austritt der Turbine 8 aus. Die Gasturbine 1 ist Bestandteil einer nicht näher gezeigten Kraftwerksanlage, die auch als GuD-Anlage ausgelegt sein kann. Bei einer GuD-Anlage wird das Abgas in einen Dampferzeuger geleitet und der dort erzeugte Dampf zum Antrieb einer Dampfturbine genutzt. Die Dampfturbine kann auch auf derselben Welle 2 wie die Gasturbine 1 angeordnet sein.

Sowohl Verdichter 4 als auch Turbine 8 der Gasturbine 1 weisen in einem Gehäuse in axialer Richtung abwechselnd nicht näher gezeigte Leitschaufeln und Laufschaufeln auf. Die Leitschaufeln sind entlang des Umfanges der Gasturbine 1 einen Kreis bildend angeordnet. Ein derartiger Kreis aus Leitschaufeln wird auch als Leitschaufelrad bezeichnet. Die Laufschaufeln sind ebenfalls kranzförmig als Laufschaufelrad an der Welle 2 drehend angeordnet. Ein Leitschaufelrad wird zusammen mit dem strömungsseitig vorangehenden bzw. nachfolgenden Laufschaufelrad als Verdichter- bzw. Turbinenstufe bezeichnet.

Der in Strömungsrichtung S ersten Verdichterstufe sind verstellbare Eintrittsleitschaufeln 10 vorangeordnet. Alternativ können auch weitere, der ersten Verdichterstufe folgende Stufen derartige verstellbare Eintrittsleitschaufeln 10 aufweisen. Die verstellbaren Eintrittsleitschaufeln 10 können den Eintrittsquerschnitt in den Verdichter 4 variieren und ermöglichen es so, den Eintrittsmassenstrom von Luft in den Verdichter 4 zu regeln. Angesteuert werden die Eintrittsleitschaufeln 10 dabei von einer Regelungseinrichtung 12, die Eingangsdaten von einer Leistungsmesseinrichtung 14 auf der Welle 2 erhält, die die Leistung der Gasturbine 1 misst.

Die Regelungseinrichtung 12 erhält weitere Betriebsdaten der Gasturbine 1 von entsprechenden Sensoren und steuert weitere Parameter wie z. B. die Zufuhr von Brennstoff in die Brennkammer 6. Dies ist jedoch nicht näher dargestellt. In der Regelungseinrichtung 12 wird benutzerseitig manuell oder automatisiert je nach Anforderung ein Leistungssollwert vorgegeben. Erhöht sich der Leistungssollwert, wird die Zufuhr von Brennstoff gesteigert und die Eintrittsleitschaufeln 10 geöffnet. Verringert sich der Leistungssollwert z. B. im Teillastbetrieb, wird die Zufuhr von Brennstoff verringert und die Eintrittsleitschaufeln 10 werden teilweise geschlossen.

Die Gasturbine 1 weist weiterhin eine CO-Messeinrichtung 16 stromab des Austritts der Turbine 8 auf, die den CO-Gehalt im Abgas der Gasturbine 1 misst und an ein CO-Abgasgehalt-Ermittlungsmodul in der Regelungseinrichtung 12 übergibt. Je nach Standort der Gasturbine 1 liegen typischerweise gesetzliche Grenzwerte für den CO-Gehalt vor, die nicht überschritten werden dürfen. Wird ein sehr niedriger Leistungssollwert vorgegeben, wird die Verbrennungstemperatur in der Brennkammer 6 jedoch unter Umständen so gering, dass nur eine unvollständige Verbrennung erfolgt und der CO-Grenzwert überschritten wird. Dies limitiert den Betriebsbereich der Gasturbine 1.

Um hier Abhilfe zu schaffen, weist der Verdichter 4 der Gasturbine 1 eine Rückführleitung 18 auf, die in dem Ausführungsbeispiel der FIG 1 aus einem Mittelbereich des Verdichters 4, d. h. zwischen zwei Verdichterstufen zum Eintritt des Verdichters 4 führt. Ein in der Rückführleitung 18 angeordnetes Durchflussregelventil 20 regelt den Massenstrom durch die Rückführleitung 18 und wird von der Regelungseinrichtung 12 angesteuert.

Wird nun ein vergleichsweise niedriger Leistungssollwert für die Gasturbine 1 vorgegeben, wird wie beschrieben die Zufuhr von Brennstoff verringert und die Eintrittsleitschaufeln 10 werden teilweise geschlossen. In der Folge sinkt die Verbrennungstemperatur in der Brennkammer 6 und der CO-Gehalt im Abgas steigt. Nähert sich der CO-Gehalt dem gesetzlichen Grenzwert an oder überschreitet eine vorgegebene Schwelle, öffnet die Regelungseinrichtung das Durchflussregelventil 20.

Durch den höheren Druck im Mittelbereich des Verdichters 4 im Vergleich zum Eintritt strömt nun verdichtete und erwärmte Luft durch die Rückführleitung 18 und wird am Eintritt des Verdichters 4 abgegeben. Dadurch sinkt einerseits direkt der Massenstrom durch den Verdichter 4, andererseits steigt die Eintrittstemperatur am Eintritt des Verdichters 4, was eine Dichtereduzierung und damit eine weitere Verringerung des Massenstroms zur Folge hat. In der Folge sinkt daher die Leistung der Gasturbine 1.

Diese Leistungsabsenkung wird durch die Regelungseinrichtung 12 erkannt und durch entsprechendes Öffnen der Eintrittsleitschaufeln 10 kompensiert. Dadurch steigt die Leistung zusammen mit der Verbrennungstemperatur in der Brennkammer 10 wieder an, so dass der Leistungssollwert gehalten wird. Durch die erhöhte Verbrennungstemperatur sinkt der CO-Gehalt im Abgas.

Durch die beschriebene Regelung kann bei gleichbleibendem CO-Gehalt im Abgas die Leistung der Gasturbine 1 auch unterhalb des Leitschaufelverstellbereichs weiter gesenkt werden oder bei gleichbleibender Leistung im Teillastbetrieb der CO-Gehalt gesenkt werden.

Eine alternative Ausführungsform der Erfindung ist in FIG 2 gezeigt, die nur anhand der Unterschiede zur FIG 1 beschrieben wird.

Die Rückführleitung 18 ist hier Bestandteil eines Anti-Vereisungssystems 22. Sie führt vom Austritt des Verdichters 4 zu dessen Eintritt. Das Anti-Vereisungssystem 22 umfasst einen Temperatursensor 24, der außerhalb der Gasturbine 1 angeordnet ist und die Umgebungstemperatur misst. Der Temperatursensor 24 ist datenausgangsseitig mit der Regelungseinrichtung 12 verbunden.

Unterschreitet die Temperatur am Verdichtereintritt einen vorgegebenen Grenzwert, wird das Durchflussregelventil 20 durch die Regelungseinrichtung 12 geöffnet, so dass die Temperatur durch die erwärmte Luft aus dem Verdichterende wieder ansteigt, bis der Grenzwert wieder überschritten ist. Das beschriebene Verfahren zur CO-Reduktion im Teillastbetrieb ist hier in das Anti-Vereisungssystem 22 integriert. Auch bestehende Anti-Vereisungssysteme 22 können durch eine entsprechende Anpassung der Software in der Regelungseinrichtung 12 zur Ausführung des Verfahrens ertüchtigt werden.

In einer weiteren, nicht gezeigten Ausführungsform wird der CO-Gehalt im Abgas nicht gemessen, sondern im CO-Abgasgehalt-Erkennungsmodul ist ein Kennfeld vorgegeben, welches aus den aktuellen Kennwerten der Gasturbine wie z. B. Leitung, Verbrennungstemperatur etc. den CO-Abgasgehalt theoretisch ermittelt. Alternativ legt das Kennfeld direkt eine Öffnungsstellung für das Regelventil 20 fest. Der CO-Gehalt und dessen gesetzliche Begrenzung gehen dann nur noch bei der Festlegung des Kennfeldes ein.

In allen Ausführungsformen sollte die Verdichtereintrittstemperatur gemessen und in die Regelung eingebracht werden, um den Verdichter vor unzulässig hohen Temperaturen zu schützen.

Das System kann weiterhin auch unterhalb des minimalen Öffnungspunktes der verstellbaren Eintrittsleitschaufeln 10 verwendet werden, um die CO-Emissionen zu reduzieren. Wird das System unterhalb des minimalen Öffnungspunktes aktiviert, muss zunächst die Verdichteraustrittstemperatur erhöht werden, um die Leistung auf den ursprünglichen Wert anzuheben. Reicht das nicht aus, müssen anschließend die verstellbaren Eintrittsleitschaufeln 10 weiter geöffnet werden, um die Leistung weiter zu erhöhen.

## Patentansprüche

1. Verfahren zur Regelung der CO-Emissionen einer Gasturbine (1) mit einem Verdichter (4) und einer Turbine (8), bei dem in einem Bereich des Verdichters (4) verdichtete Luft entnommen und über eine durchflussgeregelte Rückführleitung (18) dem Eintritt des Verdichters (4) zugeführt wird, wobei der Durchfluss der Rückführleitung (18) anhand eines CO-Abgasgehalts am Austritt der Turbine (8) geregelt wird.

2. Verfahren nach Anspruch 1,
bei dem bei einer Erhöhung des CO-Abgasgehalts der Durchfluss der Rückführleitung (18) erhöht wird.

3. Verfahren nach einem der vorhergehenden Ansprüche,
bei dem der Eintrittsmassenstrom des Verdichters (4) anhand eines Sollwerts für die Leistung der Gasturbine (1) geregelt wird.

4. Verfahren nach einem der vorhergehenden Ansprüche,
bei dem die verdichtete Luft am Austritt des Verdichters (4) entnommen wird.

5. Verfahren nach einem der Ansprüche 1 bis 3,
bei dem die verdichtete Luft in einem Mittelbereich des Verdichters (4) entnommen wird.

6. Verfahren nach einem der vorhergehenden Ansprüche,
bei dem der Durchfluss der Rückführleitung (18) anhand einer Umgebungstemperatur geregelt wird, insbesondere bei einer Senkung der Umgebungstemperatur erhöht wird.

7. Gasturbine (1),
deren CO-Emissionen mit dem Verfahren nach einem der vorhergehenden Ansprüche geregelt werden.

8. Gasturbine (1) mit einem Verdichter (4) und einer Turbine (8), bei der ein Bereich des Verdichters (4) über eine Rückführleitung (18) für verdichtete Luft mit dem Verdichtereintritt verbunden ist,
wobei die Rückführleitung (18) ein Durchflussregelventil (20) aufweist, welches steuerungseingangsseitig mit einer Regelungseinrichtung (12) verbunden ist, welche ein CO-Abgasgehalt-Ermittlungsmodul umfasst.

9. Gasturbine (1) nach Anspruch 8,
bei der der Verdichter (4) verstellbare Eintrittsleitschaufeln (10) aufweist, die steuerungseingangsseitig mit der Regelungseinrichtung (12) verbunden sind, und die eine Leistungsmesseinrichtung (14) aufweist, die datenausgangsseitig mit der Regelungseinrichtung (12) verbunden ist.

10. Gasturbine (1) nach Anspruch 8 oder 9,
bei der die Rückführleitung (18) am Austritt des Verdichters (4) angeordnet ist.

11. Gasturbine (1) nach Anspruch 8 oder 9,
bei der die Rückführleitung (18) in einem Mittelbereich des Verdichters (4) angeordnet ist.

12. Gasturbine (1) nach einem der Ansprüche 8 bis 11,
bei der die Rückführleitung (18) Bestandteil eines Anti-Vereisungssystems (22) der Gasturbine (1) ist.

13. Gasturbine (1) nach einem der Ansprüche 8 bis 12,
bei der die Regelungseinrichtung (12) für die Durchführung des Verfahrens nach einem der Ansprüche 1 bis 6 ausgelegt ist.

14. Kraftwerksanlage mit einer Gasturbine (1) nach einem der Ansprüche 7 bis 13.
